(19) **Europäisches Patentamt**
**European Patent Office**
**Office européen des brevets**

(11) **EP 4 694 027 A1**

(12) **EUROPEAN PATENT APPLICATION**

(43) Date of publication:
**11.02.2026 Bulletin 2026/07**

(51) International Patent Classification (IPC):
*H04L 9/00* $^{(2022.01)}$     *H04L 9/08* $^{(2006.01)}$
*H04L 9/30* $^{(2006.01)}$

(21) Application number: **24193457.9**

(22) Date of filing: **07.08.2024**

(52) Cooperative Patent Classification (CPC):
**H04L 9/008;** H04L 9/085; H04L 9/3093

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Vaultree, Ltd.**
**Cork T12 RD43 (IE)**

(72) Inventor: **Pradhan, Anil Kumar**
**Dublin (IE)**

(74) Representative: **Gillespie, Richard**
**Inventorship**
**Suite 10050**
**5 Fitzwilliam Square**
**Dublin 2, D02 R744 (IE)**

(54) **ENCRYPTED DATA SHARING AND COMPUTATION**

(57) The present application is directed towards secure data sharing and computation. In particular, the present application is directed to improvements in the use of Multi-Key Fully Homomorphic Encryption (FHE), to perform computations on encrypted data without the need for decryption, thereby providing a means for encrypted data sharing and computation. This, in turn, facilitates collaborative analysis of data while maintaining data confidentiality. This is done by generating a local secret key for the user; generating a local public key $pk_j$, based on the local secret key; sharing the local public key with the other users, receiving a local public key from each of the other users; and generating a common public key based on the N local public keys.

EP 4 694 027 A1

**Description**

Field

The present application is directed towards secure data sharing and computation. In particular, the present application is directed to improvements in the use of Multi-Key Fully Homomorphic Encryption (FHE), to perform computations on encrypted data without the need for decryption, thereby providing a means for encrypted data sharing and computation. This, in turn, facilitates collaborative analysis of data while maintaining data confidentiality.

Background

Fully Homomorphic Encryption (FHE) is a form of cryptography that allows computations to be performed directly on encrypted data. The output from a computation performed in the encrypted domain is an encrypted result that is equivalent to the plaintext result provided performing the same computation in the plaintext domain. To put it differently, performing an encrypted operation on an encrypted first value and an encrypted second value produces an encrypted result - and this encrypted result, when decrypted, is equal to the result produced by performing the plaintext version of the operation on the plaintext version of the first value and the plaintext version of the second value.

However, most prior art FHE techniques rely on a single secret key which is used for both encryption and decryption. This type of FHE is referred to in this disclosure as single-key FHE. This use of a single key limits how FHE can be used. For example, single-key FHE is not suitable for use in scenarios where two or more users need to collaborate while preserving privacy.

Multi-Key FHE addresses this limitation by allowing encryption under different keys. This enables computation on ciphertexts encrypted under different keys. As a result, two or more users can encrypt their data using their respective keys, and computations can be performed in the encrypted domain on the encrypted data without the need for a single centralised authority to decrypt the data.

Multi-Key FHE for Encrypted Data Sharing has a number of applications, including:

1) Secure Collaboration: Multi-Key FHE facilitates secure collaboration among multiple parties by allowing them to encrypt their data under their own keys and share the encrypted data with others. This ensures that each party retains control over their data while enabling collaborative analysis and computation on the encrypted data.

2) Privacy-Preserving Data Sharing: Multi-Key FHE can be used to securely share sensitive data between parties while ensuring that the data remains encrypted and inaccessible to unauthorised entities. This is particularly useful in applications where maintaining the privacy of data is of utmost importance, for example where the data relates to healthcare, finance, research, etc.

3) Secure Outsourcing of Computations: Multi-Key FHE van be used to securely outsource commutations to third-party service providers without compromising the privacy of the underlying data. Parties can encrypt their data under their own keys and delegate computations to external entities, ensuring that the data remains encrypted throughout the computation process. This is particularly useful for cloud-based services.

One of advantage of Multi-Key FHE is that it can be used to perform computations on shared encrypted data without the need for decryption. This allows multiple parties to collaborate on data analysis and computation while preserving the privacy of the underlying data. Common computations that can be performed on shared encrypted data include the fundamental arithmetic operations (i.e. addition, multiplication, subtraction, and division). Further, the use Multi-Key FHE can enable various machine learning algorithms to use encrypted data.

However, while Multi-Key FHE offers significant advantages for secure encrypted data sharing and computation, there are significant problems with existing Multi-Key FHE systems. For example:

1. Performance Overhead: Multi-Key FHE schemes often incur higher computational overhead compared to traditional FHE schemes, due to the complexity of involving multiple keys and performing computations on ciphertexts encrypted under different keys. In particular the computational cost of each operation (e.g. addition or multiplication) over encrypted data grows exponentially with each user due to the corresponding increase in the number of keys. This is a particular issue with re-linearization and bootstrapping, which may be need to perform operations (such as e.g. multiplication) over encrypted data.

2. Key Management: Managing multiple keys and ensuring secure key distribution among parties can be challenging, especially in large-scale deployments with numerous participants.

3. Scalability: As the number of users involved in data sharing increases, and given the exponential computational increases noted above, there is a problem scaling Multi-Key FHE. As result, efficient protocols, algorithms, or both are needed to handle the increased computation and communication complexity.

Object

The present disclosure is directed towards addressing the present limitations of existing Multi-Key Fully Homomorphic Encryption (FHE) systems. In particular, the present disclosure is directed at reducing the computational cost incurred through increasing the number of users of a Multi-Key FHE system. This advantageously avoids the present exponential increase in computational costs when a user is added to the system as a result of the increase in number of keys under existing Multi-Key Systems.

Summary

The present disclosure is directed towards a computer implemented method of generating a public key for a user j in a multi-key FHE system of N users, including user j, the method comprising: generating a local secret key for the user; generating a local public key $pk_j$ based on the local secret key; sharing the local public key with the other users, and receiving a local public key from each of the other users; and generating a common public key based on the N local public keys.

Preferably, generating a local public key $pk_j$ based on the local secret key comprises multiplying the secret key with a predetermined local function $f_j$.

Preferably, the local functions for the N users ($f_1,...,f_N$) are public parameters.

Preferably, the local function operates on a set of predetermined random numbers.

Preferably, the set of predetermined random numbers is a set of N random numbers which are public parameters.

Preferably, the predetermined local function $f_j$ is a polynomial interpolation.

The present disclosure is also directed towards a method of performing multi-key FHE encryption comprising: generating a public key as set out above; and encrypting data using the public key.

The present disclosure is also directed towards calculating a re-linearization key, wherein calculating the re-linearization key comprises: calculating a partial set of first auxiliary keys based on the local secret key; sharing the partial set of first auxiliary keys with the other users and receiving a partial set of first auxiliary keys from each of the other users, such that each user has a full set of first auxiliary keys; calculating a partial set of second auxiliary keys based on the local secret key and the full set of first auxiliary keys; sharing the partial set of second auxiliary keys with the other users and receiving a partial set of second auxiliary keys from each of the other users, such that each user has a full set of second auxiliary keys; and calculating the re-linearization key based on the full set of first auxiliary keys and the full set of second auxiliary keys.

The present application is also directed towards a method of performing a multiplication operation on encrypted data comprising: calculating a re-linearization key as described above; and using the re-linearization key to perform a homomorphic multiplication operation.

The present disclosure is also directed towards a method of performing addition on encrypted data, wherein the encrypted data was encrypted using a public key generated as described above, wherein the method comprises: adding the ciphertexts together coordinate wise.

The present disclosure is also directed towards a method of decrypting data by a user Oj, wherein when the data was encrypted using a public key generated as described above, wherein the method of decryption comprises: computing a partial decryption, wherein a partial decryption is calculated by performing a decryption operation on the cyphertext using the user's local secret key; receiving a partial decryption from each of the other users; and decrypting the data using all of the partial decryptions.

The present disclosure is also directed towards an alternative method of decrypting data, wherein when the data was encrypted using a public key generated as described above, wherein the method of decryption comprises: computing a first partial decryption by a first user, wherein a partial decryption is calculated by performing a decryption operation on the cyphertext using the first user's local secret key; at the next user in a sequence of the users, obtaining all the partial decryptions obtained by the previous user; and calculating another partial decryption using the next user's local secret key; and repeating the preceding step until the last user in the sequence of users has obtained partial decryptions from all of the users; and decrypting the data using all of the partial decryptions.

The present disclosure is also directed towards a computer program comprising instructions which, when executed by a computer, cause the computer to perform any of the above methods.

The present disclosure is also directed towards a computer readable storage medium, or a computer readable data carrier signal, comprising instructions which, when executed by a computer, cause the computer to perform any of the methods set out above.

The present disclosure is also directed towards a data processing system comprising means for performing any of the methods set out above.

Detailed Description

In a prior art FHE scheme the ciphertext c usually comprises the product of mask $\alpha$ and secret key $s$, added to the encoded plaintext m and noise e. I.e. Encrypt $(m, s) =$

$$c = (c_0, c_1) = (as + \text{Encode}(m, e), -a)$$

And decrypt (c, s) =

$$m = \text{Decode}(c_0 + c_1 s)$$

For example, in the Brakerski/Fan-Vercauteren (BFV) FHE encryption scheme:

$$\text{Encode}(m, e) = \Delta m + e, \Delta = \lfloor q/t \rfloor$$

where t is the plaintext space, and:

$$\text{Decode}(\Delta m + e) = \left[ \frac{\Delta m + e}{\Delta} \right] = m.$$

As a further example, in the Brakerski-Gentry-Vaikuntanathan (BGV) FHE encryption scheme:

$$\text{Encode}(m, e) = tm + e$$

where t is the plaintext space, and:

$$\text{Decode}(tm + e) = (tm + e) \bmod t = m.$$

It should also be noted that a property of the encode and decode functions is that performing the decode function on the encode function will output the plaintext. I.e:

$$\text{Decode}\big(\text{Encode}(m, e)\big) = m.$$

In addition, a further property of the encode function is that:

$$\text{Encode}(x_1, y_1) + \text{Encode}(x_2, y_2) = \text{Encode}(x_1 + x_2, x_2 + y_2)$$

In a prior art Multi-Key FHE system with $N$ involved parties with $N$ different secret keys ($s_1, s_2, ... , s_N$), the ciphertext used encrypt a plaintext m with all $N$ secret keys and $N$ random masks will have the following form:

$$(a_1 s_1 + \cdots + a_N s_N + Encode(m, e), a_1, ... , a_N)$$

In order to perform a multiplication operation on this kind of ciphertext, it is required to relinearize each quadratic combination of the secret keys i.e. $\{s_i s_j\}_{i,j} = 1, ..., N$. This results a significant computational increase with each additional user, given the exponential growth combinations for each additional user. E.g. for two users, there are two to the power of two (i.e. four) possible combinations, but for three users there are three to the power of three (i.e. twenty-seven) possible combinations.

The present disclosure comes from the arrival at the insight that a mathematical formula can be used to reduce the combination of all secret keys to a single value, thereby providing encryption which is functionally equivalent to the use of a single secret key for the performance of FHE operations. As a result, the computational cost is of performing multi-key FHE according to the present disclosure is equivalent to the computation cost of single-key FHE and does not increase exponentially. However, an encrypted value can only be decrypted when all $N$ users partially decrypt a cyphertext with their own secret keys, and impossible to compute when any of the $N$ secret keys are not used. This results in a FHE system that provides the computational simplicity of single-key FHE with the flexibility of multi-key FHE.

By way of introduction, a single secret key s may be calculated from $N$ secret keys as follows:

$$s = s_1 f_1(x_1, \dots, x_N) + \cdots + s_N f_N(x_1, \dots, x_N),$$

where $x_1, \dots, x_N$ are random values and $f_1, \dots, f_N$ are suitable functions that fit the random values.

One nonlimiting type of function that may be used is a polynomial interpolation such as, e.g. a Lagrange Interpolation. If this is used, then:

$$f_j(x_1, \dots, x_N) = \prod_{j=1, j \neq i}^{N} \frac{x_j}{x_j - x_i}, j = 1, \dots, N$$

And:

$$s = \sum_{i=1}^{N} s_i \left( \prod_{j=1, j \neq i}^{N} \frac{x_j}{x_j - x_i} \right)$$

For the sake of brevity, in the remainder of this disclosure $f_j$ is used to refer to $f_j(x_1, \dots, x_N)$, where $j = 1, \dots, N$ (e.g. $f_1$ is used to refer to $f_1(x_1, \dots, x_N)$).

Thus, in a system according to the present disclosure, the ciphertext for encrypting a plaintext message m with all $N$ secret keys may have the following form: (as + Encode(m, e), -a), which using the above equations and notation, is (a $(s_1 f_1 + \cdots + s_N f_N)$ + Encode(m, e), -a).

By reducing the secret key in ciphertext to a single value, the re-linearization step will take a constant computational time which will be the same as the single key FHE scheme. This re-linearization step will take a constant computational time irrespective of the number of users involved.

For example, if the users are a number of organisations as O1, 02, ..., ON, then O1 will have a secret key $s_1$, O2 will have a secret key $s_2$, ..., and ON will have a secret key $s_N$, giving a set of $s_1, \dots, s_N$ secret keys. A set of public parameters $x_1, \dots, x_N$ is made available for calculation $f_j$. While it is not essential for the performance of a method in accordance with the present disclosure, a secret key s may optionally be calculated as $s = s_1 f_1 + \cdots + s_N f_N$.

A public key corresponding to this secret key s can be written as pk = (as + Encode(0, e), -a). A message can then be encrypted using the public key to produce a ciphertext of the form enc(m) = (a's + Encode(m, e'), -a').

In light of the above, it is possible to implement a method of multi-key FHE for N users that does not cause an exponential increase in the cost of performing an operation on encrypted data.

For example, assuming N users (e.g. Organizations O1 to ON), public parameters $(x_1, \dots, x_N)$, $(f_1, \dots, f_N)$ can be obtained as set out above. Using these public parameters, a user Oj can compute its own secret key $s_j$ - e.g. $s_j = f_j(x_1, \dots, x_N)$. Each user computes its own secret key which is kept secret and not shared with any other party.

Next, each user computes its own local public key $pk_j$. In particular, the users O1 - ON agree a common mask $a$. Once the common mask is agreed, a user Oj can generate its own local key using the same mask as the other users. E.g. $pk_j$ may be calculated as $pk_j \leftarrow af_j s_j$ + Encode(0, $e_j$), where $e_j$ is a random noise value. Each user computes its own local public key and shares it with each of the other users.

Next a common public key $p$ can be generated. In particular, a user Oj can generate a common public key be adding together all the local public keys. For example, $p$ can be calculated as $p \leftarrow p_1 + \cdots + p_N$. Thus, the value of the public key calculated by a user will be the same as the public key calculated by each of the other users. In addition, the public key is based on all N secret keys. has been calculated based on all N secret keys and is therefore equivalent to a public key generated from a single secret key s. E.g:

$$p \leftarrow p_1 + \cdots + p_N = \sum_{j=1}^{N} a f_j s_j + \text{Encode}(0, e_j)$$

$$= a(s_1 f_1 + \cdots + s_N f_N) + \text{Encode}(0, e) = as + \text{Encode}(0, e), \qquad e = \sum_{j=1}^{N} e_j$$

$$pk = (as + \text{Encode}(0, e), \qquad -a) = (pk_0, pk_1)$$

Next each user calculates a re-linearization key *rlk.* A re-linearization key facilitates the efficient execution of homomorphic multiplication on encrypted data. Typically, it is computed by encrypting some multiple of the square of the secret key $s^2$ using the secret key *s.* E.g.: *rlk = (as + encoders², e), -a)*

However, in a method in accordance with the present disclosure, none of the users know the value of *s* as its calculating requires the use of all the other users' secret keys, and these secret keys are not shared. Thus, the re-linearization key needs to be calculated in a different way.

Preferably, a user Oj calculates two encrypted values Hj and Fj which are referred to in this disclosure as first auxiliary keys. These first auxiliary keys are useful for calculating the re-linearization key. In particular, $H_j$ is an encryption of $(s_j f_j)^2$ - i.e.:

$$H_j = E\left(\left(s_j f_j\right)^2\right)$$

And $F_j$ is a set of values $\{F_{ji}\}_{i=1, i \neq j}^{N}$ , where $\{F_{ji}\}$ is an encryption of $2s_j f_j f_i$, i.e.

$$F_{ji} = E\left(2s_j f_j f_i\right)$$

Each user calculates these first auxiliary keys and these keys are published or otherwise shared with the other N-1 users. As a result, a user Oj will have the following sets of first auxiliary keys:

$$\{H = E((s_n f_n)^2) : n = 1, 2, \ldots, N\}$$

and

$$\{F = E(2s_n f_n f_i) : n = 1, \ldots, N\}_{i=1, i \neq n}^{N}$$

Once the two sets of first auxiliary keys have been obtained, a user Oj can calculate a partial set of second auxiliary keys Gj. In particular:

$$G_j \leftarrow s_j * F$$

Where * is a multiplication operation performed in the FHE encrypted domain. As a result:

$$\left\{G_j = E\left(2s_j s_n f_n f_i\right) : i = 1, \ldots, N\right\}_{n=1, n \neq i}^{N}$$

Each user calculates their partial set of second auxiliary keys and publishes them or otherwise shares them with the other users. As a result, a user Oj will have a full set of second auxiliary keys:

$$\{G = E(2s_i s_n f_n f_i) : i = 1, \ldots, N\}_{n=1, n \neq i}^{N}$$

The re-linearization rlk can now be calculated. This is because:

$$s^2 = (s_1 f_1 + \cdots + s_N f_N)^2 = \sum_{i=1}^{N} (s_i f_i)^2 + \sum_{1 \leq i < n \leq N} 2s_i s_n f_n f_i$$

Thus, a user Oj can calculate the re-linearization key as follows:

$$rlk \leftarrow \sum_{i=1}^{N} H + \sum_{1 \leq i < n \leq N} G$$

And as noted above, this will be equivalent to a re-linearization key calculated based on the secret key s because:

$$rlk \leftarrow \sum_{i=1}^{N} H + \sum_{1 \leq i < n \leq N} G$$

$$= \sum_{i=1}^{N} E(s_i f_i)^2 + \sum_{1 \leq i < n \leq N} E(2 s_i s_n f_i f_n)$$

$$= E\left(\sum_{i=1}^{N} (s_i f_i)^2 + \sum_{1 \leq i < n \leq N} (2 s_i s_n f_i f_n)\right) = E(s^2)$$

Thus, it is possible to compute $E(s^2)$ through the use of auxiliary keys as set out above. Similarly, the same method can be used to compute some multiple $E(s^2)$ of e.g. $E(w.s^2)$ which can also be used as the re-linearisation key.

A user Oj can obtain a cyphertext c by performing encryption of a plaintext m with the public key pk using the same method as that used for single key FHE. E.g:

$$u \leftarrow Random()$$

$$c \leftarrow \left(pk_0 . u + \text{Encode}(m, e'), pk_1 . u + \text{Encode}(0, e'')\right) = (c_0, c_1)$$

In order to perform decryption, a user Oj first partially decrypts the ciphertext using their own secret key. Once all users have obtained a partial decryption of the cyphertext, the partial decryptions are shared with the other users. Using as a result, a user can obtain a full decryption using all the partial decryptions.

In particular, the cyphertext will have the form:

$$c = (c_0, c_1) = (as + \text{Encode}(m, e), -a)$$

$$= (a(s_1 f_1 + \cdots + s_N f_N) + \text{Encode}(m, e), -a)$$

A user Oj will compute a partial decryption $d_j$ using random noise $e_j$, e.g.:

$$d_j \leftarrow c_1 s_j f_j + \text{Encode}(0, e_j) = \left(-a s_j f_j + \text{Encode}(0, e_j)\right)$$

Once all users have computed a partial decryption, these partial decryptions are shared between all N users. Thus, the user Oj will have the following set of partial decryptions:

$$\{d = (d_i) : i = 1, \ldots, N\}$$

As a result, the user Oj will be able to decrypt the cyphertext using the set of partial decryptions. E.g.: by calculating an encoded version of the plaintext message m*, and then decoding it to obtain the plaintext message m:

$$m^* \leftarrow c_0 + \sum_{i=1}^{N} d_i$$

$$= \left(as + \text{Encode}(m, e)\right) - \sum_{i=1}^{N} a f_i s_i + \text{Encode}(0, e_i) = \text{Encode}\left(m, e - \sum_{i=1}^{N} e_i\right)$$

and

$$\text{Decode}(m^*) \rightarrow m$$

In a method according to the present disclosure, homomorphic operations can be performed on at least two cyphertext c and c', where c is obtained by encrypting plaintext value m and c' is obtained by encrypting plaintext value m'.

For example, ciphertext addition can be performed using the same techniques used in single key FHE. For example, by adding the ciphertexts coordinate wise to obtain a resultant ciphertext. E.g.:

$$c_{new} = c + c' = (c_0 + c_0', \quad c_1 + c_1')$$

It should be noted that:

$$c = (as + \text{Encode}(m, e), -a), c' = (a's + \text{Encode}(m', e'), -a')$$

$$c_{new} = c + c' = \left((a + a')s + \text{Encode}(m + m', e + e'), \quad -(a + a')\right)$$
$$= (a''s + \text{Encode}(m + m'', e''), -a'')$$

where $a'' = (a + a')$, $e'' = (e + e')$

This illustrates that $c_{new}$ is an encryption of the sum $(m + m')$

As a further example ciphertext multiplication can computed using the same method used for the single Key FHE because each use will have a re-linearization key as calculated as set out above. As a result, the time, complexity, and computational costs for multiplication operation will be equivalent to single key FHE multiplication and will not increase exponentially with additional users in a group of users.

Thus, an addition or multiplication operation can be performed on encrypted data e.g. D1 & D2, even though D1 and D2 are owned by different users.

As a result, the present disclosure provides a multi-key FHE system without the computational drawbacks of multi-key FHE systems. In particular, a multi-key FHE system according to the present disclosure performs FHE operations which are computationally equivalent to single key FHE operations. As a result, the cost of operations on encrypted data encrypted using the multi-key FHE according to the present disclosure remains the same as the cost of operations on encrypted data encrypted using single-key FHE.

As such, Multi-Key FHE systems and methods in accordance with the present disclosure ensure that the cost of encrypted operations remains constant, irrespective of the number of users of the system. It is noted that this is a significant advance of prior art Multi-Key FHE system and methods because it eliminates the exponential growth in computational overhead associated with adding each additional user. Thus, systems and methods according to the present disclosure remove a significant constraint on prior art solutions and a significant reduction in temporal and power consumption costs of secure data sharing and computation.

As a result, users (such as organisations) can confidently collaborate on data analysis and computation, knowing that the performance of encrypted operations remains predictable and consistent regardless of the number of users involved.

## Claims

1. A computer implemented method of generating a public key for a user j in a multi-key FHE system of N users, including user j, the method comprising:

generating a local secret key for the user;

generating a local public key $pk_j$ based on the local secret key;

sharing the local public key with the other users, and receiving a local public key from each of the other users; and

generating a common public key based on the N local public keys.

2. The method of claim 1, wherein generating a local public key $pk_j$ based on the local secret key comprises multiplying the secret key with a predetermined local function $f_j$.

3. The method of claim 2, wherein the local functions for the N users $(f_1,...,f_N)$ are public parameters.

4. The method of any one of claims 2 to 3, wherein the local function operates on a set of predetermined random numbers.

5. The method of claim 4, wherein the set of predetermined random numbers is a set of N random numbers which are public parameters.

6. The method of any one of claims 2-5, wherein the predetermined local function $f_j$ is a polynomial Interpolation.

7. A method of performing multi-key FHE encryption comprising:

generating a public key in accordance with a method according to any preceding claim; and

encrypting data using the public key.

8. A method according to claim 3 comprising calculating a re-linearization key, wherein calculating the re-linearization key comprises:

calculating a partial set of first auxiliary keys based on the local secret key;

sharing the partial set of first auxiliary keys with the other users and receiving a partial set of first auxiliary keys from each of the other users, such that each user has a full set of first auxiliary keys;

calculating a partial set of second auxiliary keys based on the local secret key and the full set of first auxiliary keys;

sharing the partial set of second auxiliary keys with the other users and receiving a partial set of second auxiliary keys from each of the other users, such that each user has a full set of second auxiliary keys; and

calculating the re-linearization key based on the full set of first auxiliary keys and the full set of second auxiliary keys.

9. A method of performing a multiplication operation on encrypted data comprising:

calculating a re-linearization key using a method according to claim 8;

using the re-linearization key to perform a homomorphic multiplication operation.

10. A method of performing addition on encrypted data, wherein the encrypted data was encrypted using a public key generated in accordance with any one of claims 1-6, wherein the method comprises:

adding the ciphertexts together coordinate wise.

11. A method of decrypting data by a user Oj, wherein when the data was encrypted using a public key generated using a method according to any one of claims 1 to 6, and the method of decryption comprises:

computing a partial decryption, wherein a partial decryption is calculated by performing a decryption operation on the cyphertext using the user's local secret key;

receiving a partial decryption from each of the other users; and

decrypting the data using all of the partial decryptions.

12. A method of decrypting data by a system of N users, wherein when the data was encrypted using a public key generated using a method according to any one of claims 1 to 6, and the method of decryption comprises:

computing a first partial decryption by a first user, wherein a partial decryption is calculated by performing a decryption operation on the cyphertext using the first user's local secret key;

at the next user in a sequence of the users,

obtaining all the partial decryptions obtained by the previous user; and
calculating another partial decryption using the next user's local secret key; and

repeating the preceding step until the last user in the sequence of users has obtained partial decryptions from all of the users; and
decrypting the data using all of the partial decryptions.

13. A computer program comprising instructions which, when executed by a computer, cause the computer to perform a method according to any preceding claim.

14. A computer readable storage medium, or a computer readable data carrier signal, comprising instructions which, when executed by a computer, cause the computer to perform a method according to any one of claims 1-12.

15. A data processing system comprising means for performing a method according any one of claims 1-12.

EP 4 694 027 A1

Europäisches
Patentamt
European
Patent Office
Office européen
des brevets

# EUROPEAN SEARCH REPORT

**Application Number**

EP 24 19 3457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/399874 A1 (POLYAKOV YURIY [US] ET AL) 23 December 2021 (2021-12-23)<br>* abstract *<br>* paragraphs [0003], [0008], [0013], [0014], [0016] - [0023] *<br>----- | 1-15 | INV.<br>H04L9/00<br><br>ADD.<br>H04L9/08<br>H04L9/30 |
| X | KWAK HYESUN ET AL: "A General Framework of Homomorphic Encryption for Multiple Parties with Non-interactive Key-Aggregation",<br>29 February 2024 (2024-02-29), APPLIED CRYPTOGRAPHY AND NETWORK SECURITY; [LECTURE NOTES IN COMPUTER SCIENCE; LECT.NOTES COMPUTER], SPRINGER NATURE SWITZERLAND, CHAM, PAGE(S) 403 - 430, XP047680853,<br>ISSN: 0302-9743<br>ISBN: 978-3-031-54772-0<br>[retrieved on 2024-02-29]<br>* abstract *<br>* Sections 1.2, 3, 4 *<br>----- | 1-15 | |
| X | LI HUI ET AL: "Multi-hop Multi-key Homomorphic Encryption with Less Noise Under CRS Model",<br>29 September 2022 (2022-09-29), 20220929, PAGE(S) 342 - 357, XP047634858,<br>[retrieved on 2022-09-29]<br>* abstract *<br>* Sections 2-4 *<br>----- | 1-15 | **TECHNICAL FIELDS SEARCHED (IPC)**<br><br>H04L |

The present search report has been drawn up for all claims

| Place of search | Date of completion of the search | Examiner |
|---|---|---|
| Munich | 17 January 2025 | Wolters, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

11

## ANNEX TO THE EUROPEAN SEARCH REPORT
## ON EUROPEAN PATENT APPLICATION NO.

EP 24 19 3457

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2025

| Patent document cited in search report | Publication date | Patent family member(s) | Publication date |
|---|---|---|---|
| US 2021399874 A1 | 23-12-2021 | NONE | |

EPO FORM P0459

For more details about this annex : see Official Journal of the European Patent Office, No. 12/82